# EUROPÄISCHE PATENTSCHRIFT

(11) **EP 2 295 226 B1**
(45) Veröffentlichungstag und Bekanntmachung des Hinweises auf die Patenterteilung: **29.05.2013**
(21) Anmeldenummer: 10175119.6
(22) Anmeldetag: 02.09.2010
(51) Int. Cl.: B29C 49/78, B67C 3/00, B65C 9/40, B67B 3/26

(54) **Behältnisbehandlungsanlage und ein Behältnisbehandlungsverfahren zum Behandeln von mit einem Produkt befüllbaren Behältnissen**
Container processing assembly and a container processing method for processing containers which can be filled with a product
Installation de traitement de récipient et procédé de traitement de récipient pour le traitement de récipients pouvant être remplis avec un produit

(30) Priorität: 11.09.2009 DE 102009040977
(43) Veröffentlichungstag der Anmeldung: 16.03.2011
(73) Patentinhaber: Krones AG, 93073 Neutraubling (DE)
(72) Erfinder: Stoiber, Christian, 93185, Michelsneukirchen (DE); Voth, Klaus, 93083, Obertraubling (DE); Blochmann, Erik, 93073, Neutraubling (DE); Roidl, Wolfgang, 93180, Deuerling (DE); Winzinger, Frank, 85354 Freising (DE)
(74) Vertreter: Hannke, Christian

(56) Entgegenhaltungen:
- EP-A1- 0 602 487
- EP-A1- 0 744 224
- EP-A1- 1 627 816
- EP-A1- 2 258 623
- EP-A2- 0 894 544
- WO-A2-2008/112414
- DE-A1- 19 941 485
- DE-A1-102006 051 533
- DE-A1-102007 025 521
- ES-A1- 2 238 921
- US-A1- 2005 194 705

## Beschreibung

Die vorliegende Erfindung bezieht sich auf eine Behältnisbehandlungsanlage gemäß dem Oberbegriff des Anspruchs 1 und ein Behältnisbehandlungsverfahren zum Behandeln von mit einem Produkt befüllbaren Behältnissen.

Behältnisbehandlungsanlagen verfügen üblicherweise über mehrere Anlagenmodule, wie beispielsweise ein Streck-/Blasmodul, ein Füllmodul, ein Etikettiermodul und ein Verpackungsmodul. In dem Streck-Blasmodul werden Vorformlinge (Preforms) in Behältnisse, beispielsweise Flaschen, gestreckt und geblasen. In dem Füllmodul werden die Behältnisse gefüllt und verschlossen. In dem Etikettiermodul werden die Behältnisse etikettiert und in dem Verpackungsmodul werden die Behältnisse verpackt. Jedes dieser Anlagenmodule führt also eine spezielle Behandlung der Behältnisse aus, wie Streckblasen, Füllen, Etikettieren etc. Zusätzlich sind üblicherweise Inspektoren bzw. Prüfeinrichtungen in oder an der Anlage vorhanden, welche die Behältnisse auf Fehler prüft, damit fehlerhafte Behältnisse aussortiert werden können.

Hierzu umfasst eine Behältnisbehandlungsanlage in der Regel eine Vielzahl von verschiedenen Garnituren bzw. Behandlungselementen, welche bei den unterschiedlichen Behandlungen der Behältnisse verwendbar sind. Solche Behandlungselemente sind beispielsweise ein Einlaufstern und ein Heizdorn des Streck-Blasmoduls, ein Füllventil des Füllmoduls, ein Etikettengreifer und ein Leimschaber des Etikettiermoduls usw., um nur wenigstens ein paar der großen Vielzahl von Behandlungselementen zu nennen.

Bei einem Wechsel der Art der Behältnisse in einer Abfülllinie der Behältnisbehandlungsanlage, ist es oft notwendig, auch mindestens ein paar dieser Garnituren bzw. Behandlungselemente auszutauschen.

Die EP 1 627 816 A1 zeigt eine Anlage gemäß dem Oberbegriff des Anspruchs 1 und ein entsprechendes Verfahren.

Die DE 199 41 485 A1 zeigt eine Verpackungsmaschine, insbesondere zum Herstellen von Produkten enthaltenden Packungen. Die Verpackungsmaschine hat verschiedene formatabhängige Bauteile, die mit durch einen Lesesensor lesbaren Codes versehen sind. Dem Anwender werden falsche oder fehlende formatabhängige Bauteile angezeigt.

Die DE 693 04 419 T2 zeigt einen Arbeitskopf-Wechsler für ein Rotationssystem zur Behandlung von Behältern. Hierbei wird insbesondere der Wechsel eines Heizdorns beschrieben.

Hierzu ist es im Stand der Technik allerdings bisher notwendig, dass fast alle Behandlungselemente von einer Bedienperson per Hand ausgetauscht oder verstellt werden. Dies ist jedoch sehr zeit- und kostenintensiv, da sowohl viel Arbeitskraft benötigt wird als auch lange Umrüst- und damit Stillstandszeiten der Behältnisbehandlungsanlagen erforderlich sind.

Demzufolge ist es Aufgabe der vorliegenden Erfindung, eine Behältnisbehandlungsanlage und ein Behältnisbehandlungsverfahren zum Behandeln von mit einem Produkt befüllbaren Behältnissen zur Verfügung zu stellen, mit welchen der Wechsel der Behältnisse in der Abfülllinie der Behältnisbehandlungsanlage vereinfacht, zeitsparender und kostengünstiger wird.

Die Aufgabe wird durch eine Behältnisbehandlungsanlage zur Behandlung von mit einem Produkt befüllbaren Behältnissen nach Patentanspruch 1 und durch ein Behältnisbehandlungsverfahren nach Patentanspruch 13 gelöst.

Die Behältnisbehandlungsanlage umfasst eine Vielzahl von Behandlungselementen, wobei jedes Behandlungselement für eine vorbestimmte Behandlung der Behältnisse Verwendung findet und jedem Behandlungselement ein Behältnis-Sollwert zugeordnet ist, welcher angibt, welche Art von Behältnis das Behandlungselement behandeln kann, eine Erfassungseinrichtung zur Erfassung von Eigenschaften eines der zu behandelnden Behältnisse, und eine Vergleichseinrichtung zum Vergleich eines Erfassungsergebnisses der Erfassungseinrichtung mit dem Behältnis-Sollwert für mindestens ein Behandlungselement.

Weiter weist die Behältnisbehandlungsanlage eine Anpasseinrichtung auf zum Anpassen mindestens eines Behandlungselements der Vielzahl von Behandlungselementen, wenn ein durch die Vergleichseinrichtung durchgeführter Vergleich ergibt, dass das Erfassungsergebnis der Erfassungseinrichtung ungleich dem Behältnis-Sollwert für das mindestens eine Behandlungselement ist.

Die Anpasseinrichtung gemäß der vorliegenden Erfindung ist derart ausgestaltet, dass das mindestens eine Behandlungselement der Vielzahl von Behandlungselementen mittels der Anpasseinrichtung durch Austausch des mindestens einen Behandlungselements automatisch anpassbar ist.

Vorteilhafte Ausgestaltungen der Vorrichtung sind in den abhängigen Patentansprüchen angegeben.

Die Anpasseinrichtung kann vorteilhaft auch derart ausgestaltet sein, dass sie das mindestens eine Behandlungselement der Vielzahl von Behandlungselementen durch Verstellen des mindestens einen Behandlungselements anpasst.

Es ist auch möglich, dass die Behältnisbehandlungsanlage eine Listenerstellungseinrichtung zur Erstellung einer Liste umfasst, in welcher die Behandlungselemente aufgelistet sind, für welche der durch die Vergleichseinrichtung durchgeführte Vergleich ergibt, dass das Erfassungsergebnis der Erfassungseinrichtung ungleich dem Behältnis-Sollwert für das mindestens eine Behandlungselement ist.

Zudem kann die Behältnisbehandlungsanlage eine Berechnungseinrichtung aufweisen zur Berechnung einer Reihenfolge einer Anpassung von mindestens einem Behandlungselement der Vielzahl von Behandlungselementen, bei welcher Reihenfolge ein Öffnen einer Schutzeinrichtung der Behältnisbehandlungsanlage nicht durch die Anpassung von mindestens einem Behandlungselement der Vielzahl von Behandlungselementen behindert wird. Darüber hinaus kann eine Einrichtung zum Stopp der Behältnisbehandlungsanlage, wenn ein durch die Vergleichseinrichtung durchgeführter Vergleich ergibt, dass das Erfassungsergebnis der Erfassungseinrichtung ungleich dem Behältnis-Sollwert für das mindestens eine Behandlungselement ist, vorhanden sein.

Als weitere Möglichkeit hat die Behältnisbehandlungsanlage eine Fehlermeldeeinrichtung zur Ausgabe einer Fehlermeldung, wenn ein durch die Vergleichseinrichtung durchgeführter Vergleich ergibt, dass das Erfassungsergebnis der Erfassungseinrichtung ungleich dem Behältnis-Sollwert für das mindestens eine Behandlungselement ist.

Vorzugsweise hat die Behältnisbehandlungsanlage eine Anzeigeeinrichtung zur Anzeige eines Erfassungsergebnisses der Erfassungseinrichtung und/oder eines Vergleichsergebnisses der Vergleichseinrichtung und/oder einer durch die Listenerstellungseinrichtung erstellten Liste und/oder eines Berechnungsergebnisses der Berechnungseinrichtung und/oder eines Stopps der Behältnisbehandlungsanlage und/oder einer Fehlermeldung.

Die Behältnisbehandlungsanlage kann eine Vielzahl von Anlagenmodulen zur Ausführung einer vorbestimmten Behandlung der Behältnisse haben, wobei jedes der Vielzahl von verschiedenen Anlagenmodulen einen Teil der Vielzahl von Behandlungselementen aufweist. Hierbei kann jedes der Vielzahl von verschiedenen Anlagenmodulen eine Anlagenmodulsteuereinrichtung zur Steuerung eines Betriebs des Anlagenmoduls aufweisen und die Anlagenmodulsteuereinrichtungen können in Reihe geschaltet sein.

Die Anlagenmodulsteuereinrichtungen können über ein Kommunikationsbussystem verbunden sein.

Es ist vorteilhaft, wenn die Vielzahl von Anlagenmodulen ein Streck-Blasmodul zur Ausführung eines Streckblasverfahrens, bei welchem aus Vorformlingen Behältnisse zur Aufnahme eines Produkts geformt werden und/oder ein Füllmodul zum Befüllen der Behältnisse mit mindestens einem Produkt und Verschließen der Behältnisse und/oder ein Etikettiermodul zur Etikettierung der Behältnisse und/oder ein Verpackungsmodul zur Verpackung der befüllten und etikettierten Behältnisse umfasst.

Die Vielzahl von Behandlungselementen kann ein Rezept zur Behandlung von Behältnissen in einer Blaseinrichtung des Streck-Blasmoduls umfassen.

Die Aufgabe wird zudem durch ein Behältnisbehandlungsverfahren nach Patentanspruch 13 gelöst.

Das Behältnisbehandlungsverfahren dient zur Behandlung von mit einem Produkt befüllbaren Behältnissen mit einer Behältnisbehandlungsanlage, die eine Vielzahl von Behandlungselementen aufweist, wobei jedes Behandlungselement für eine vorbestimmte Behandlung der Behältnisse Verwendung findet und jedem Behandlungselement ein Behältnis-Sollwert zugeordnet ist, welcher angibt, welche Art von Behältnis das Behandlungselement behandeln kann. Hierbei umfass das Verfahren die Schritte: Erfassen von Eigenschaften eines der zu behandelnden Behältnisse; Vergleichen eines Erfassungsergebnisses der Erfassungseinrichtung mit dem Behältnis-Sollwert für mindestens ein Behandlungselement; Anpassen mindestens eines Behandlungselements der Vielzahl von Behandlungselementen, wenn ein Vergleich ergibt, dass das Erfassungsergebnis ungleich dem Behältnis-Sollwert für das mindestens eine Behandlungselement ist, wobei das mindestens eine Behandlungselement der Vielzahl von Behandlungselementen durch Austausch des mindestens einen Behandlungselements automatisch anpassbar ist.

Nachfolgend wird die Erfindung unter Bezugnahme auf die beiliegende Zeichnung und anhand eines Ausführungsbeispiels näher beschrieben. Es zeigen:
- Fig. 1: eine schematische Darstellung einer Behältnisbehandlungsanlage zum Behan- deln von mit einem Produkt befüllbaren Behältnissen gemäß einem ersten Aus- führungsbeispiel.
- Fig. 2: eine schematische Darstellung einer logischen Struktur für den mit einer Anpasseinrichtung in Zusammenhang stehenden Betriebs der Behältnisbehandlungsanlage von Fig. 1.
- Fig. 3: eine schematische Darstellung einer Behältnisbehandlungsanlage zum Behan- deln von mit einem Produkt befüllbaren Behältnissen gemäß einem zweiten Aus- führungsbeispiel

### (Erstes Ausführungsbeispiel)

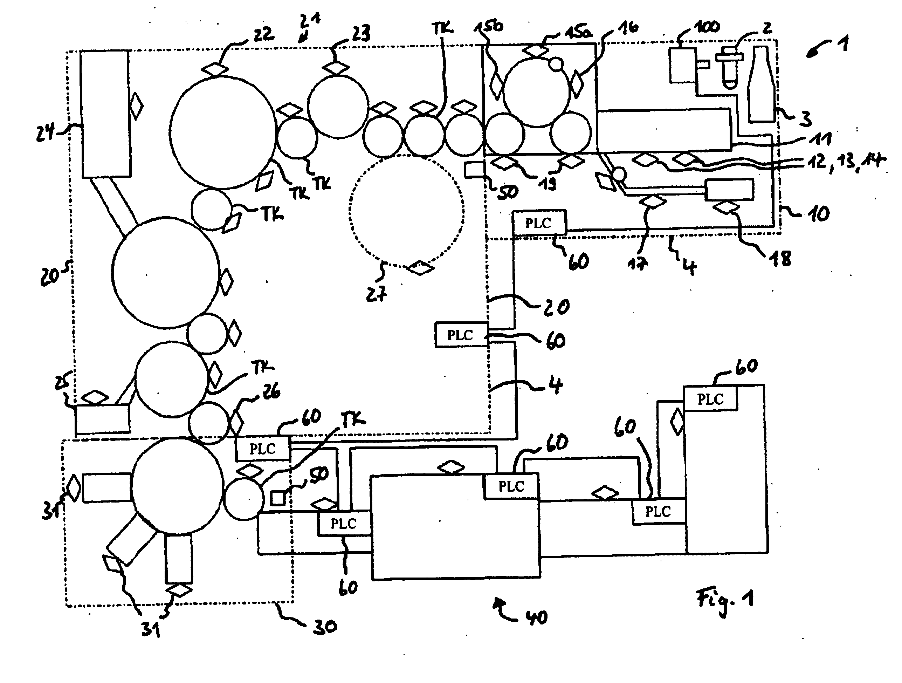

Fig. 1 zeigt eine schematische Darstellung einer Behältnisbehandlungsanlage 1 zur Behandlung von mit einem Produkt befüllbaren Behältnissen. Der Behältnisbehandlungsanlage werden Vorformlinge 2 aus Kunststoff oder Glasbehältnisse 3 zugeführt. Die Behältnisbehandlungsanlage umfasst ein Streck-Blasmodul 10, ein Füllmodul bzw. einen Füllmodulwechselautomat 20, ein Etikettiermodul 30 und ein Verpackungsmodul 40. Das Streck-Blasmodul 10 und das Füllmodul 20 sind jeweils mit einer Schutzeinrichtung 4 versehen, um das Streck-Blasmodul 10 und das Füllmodul 20 gegen äußere Einflüsse abzuschirmen bzw. Bedienpersonen vor Anlagenmodulteilen zu schützen, welche die Bedienperson evtl. im Betrieb der Anlage gefährden könnten.

In dem Streck-Blasmodul 10 werden Vorformlinge 2 aus Kunststoff, wie beispielsweise Polyethylenterephthalat (PET) oder Polypropylen (PP), in einer Erwärmungseinrichtung 11, die einen Heizdorn bzw. Heizdornwechselautomat 12, eine Abschirmplatte bzw. Abschirmplattenwechselautomat 13 und Reflektoren bzw. Reflektorenwechselautomat 14 umfasst, erwärmt und mittels eines Streckblasverfahrens in ein Behältnis, wie beispielsweise eine Flasche, für ein Produkt, wie beispielsweise eine Flüssigkeit, geformt. Hierzu umfasst das Streck-Blasmodul 10 zudem eine Reckstange/Blasdüse bzw. Reckstange/Blasdüsewechselautomat 15a, eine Reckkurve/Bodenkurve Reckkurve/Bodenkurve-Verstell- oder Wechselautomat 15b , eine Blasformeinrichtung bzw. Blasformwechselautomat 16, eine Schieneneinstelleinrichtung 17, eine Rollenabstandeinstelleinrichtung 18 und Klammern bzw. Klammernwechselautomat 19 zum Greifen der Behältnisse.

Bei der Zufuhr von Glasflaschen 3 zu der Behältnisbehandlungsanlage 1 kann das Streck-Blasmodul 10 umgangen werden. Es ist darauf hinzuweisen, dass im Sinne dieser Beschreibung mit den mit einem Produkt befüllbaren Behältnissen insbesondere die Vorformlinge 2, die daraus fertiggestellten Behältnisse bzw. Kunststoffflaschen, und die Glasflaschen 3 gemeint sind.

Die von dem Streck-Blasmodul 10 fertiggestellten Behältnisse für das Produkt werden über Transporteinrichtungen, wie beispielsweise Transportkarusselle TK, dem Füllmodul 20 zugeführt, welches die Behältnisse mit mindestens einem Produkt befüllt und dann verschließt. Hierzu umfasst das Füllmodul 20 eine Reinigungseinrichtung 21 mit einer Sterilisationsstation 22 und einem Rinser 23 zum Reinigen der Behältnisse, eine Produktmischeinrichtung 24 zum Mischen eines in die Behältnisse zu füllenden Produkts, eine Verschlusskappenstation 25 zum Zuführen und Anbringen von Verschlusskappen an den Behältnissen, und einen Ablenkstern oder Klammern 26 zum Weitertransport der Behältnisse. In einem dynamischen Puffer 27 können die von dem Streck-Blasmodul 10 ankommenden Behältnisse im Bedarfsfall zwischengelagert bzw. gepuffert werden.

Daraufhin werden die befüllten und verschlossenen Behältnisse dem Etikettiermodul 30 zugeführt, von ihm mittels mindestens einer Etikettiereinrichtung 31 etikettiert und anschließend über Transporteinrichtungen, wie beispielsweise Transportkarusselle TK dem Verpackungsmodul 40 zugeführt, in welchem die Behältnisse verpackt werden.

Zudem umfasst die Behältnisbehandlungsanlage 1 Prüfeinrichtungen 50 zum Prüfen der mittels der Behältnisbehandlungsanlage 1 behandelten Behältnisse 2. In Fig. 1 ist hierbei eine Prüfeinrichtung 50 zwischen Streck-Blasmodul 10 und Füllmodul 20 sowie eine weitere Prüfeinrichtung 50 zwischen Etikettiermodul 30 und Verpackungsmodul 40 vorgesehen. Die Prüfeinrichtungen 50 können im Bedarfsfall jedoch auch an anderen oder weiteren Stellen in der Behältnisbehandlungsanlage 1 vorgesehen sein. Mit Hilfe eines Prüfergebnisses der Prüfeinrichtungen 50 können fehlerhafte Behältnisse vor einer weiteren Behandlung durch andere Anlagenmodule aussortiert werden.

Jedes der Anlagenmodule 10, 20, 30 und 40 umfasst zudem eine Anlagenmodulsteuereinrichtung 60, welche beispielsweise eine speicherprogrammierbare Steuerung (SPS) sein kann, wie in Fig. 1 angegeben. In Fig. 1 sind die Anlagenmodulsteuereinrichtungen 60 in Reihe geschaltet. Die Kommunikation der Anlagenmodulsteuereinrichtungen 60 untereinander kann über ein drahtloses lokales Netzwerk (wireless LAN) oder über Bluetooth erfolgen

Zur Erfassung von Eigenschaften der Behältnisse umfasst die Behältnisbehandlungsanlage 1 darüber hinaus eine Erfassungseinrichtung 100, welche beispielsweise eine Kamera sein kann. Die Erfassungseinrichtung 100 kann jedoch auch ein beliebiger Sensor sein, welcher zur Erfassung von Eigenschaften der Behältnisse geeignet ist, wie beispielsweise der Geometrie und/oder des Gewichts des Behältnisses. Ein solcher Sensor kann beispielsweise auf der Grundlage eines optischen, magnetischen oder mechanischen, usw. Prinzips arbeiten. Die Erfassungseinrichtung 100 ist mit der Anlagenmodulsteuereinrichtung 60 des Streck-Blasmoduls 10 verbunden.

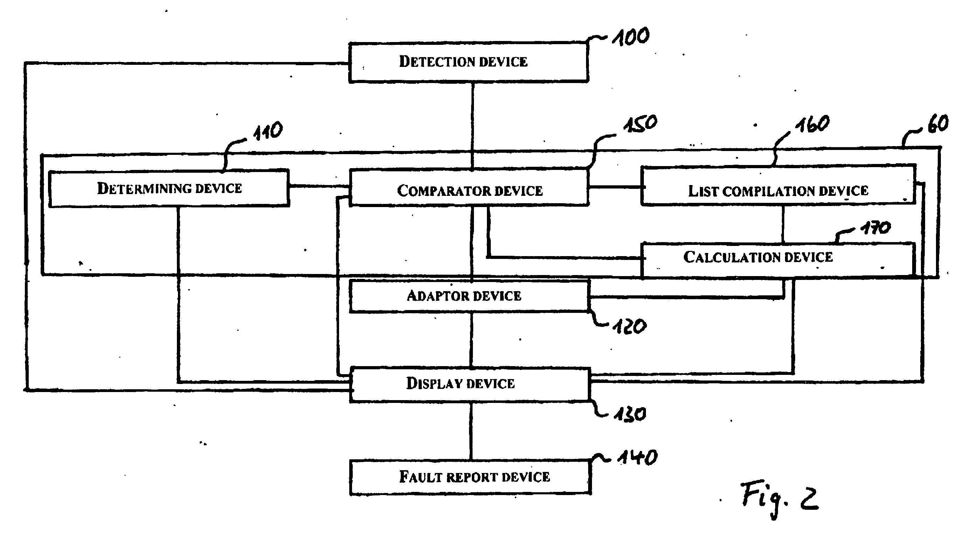

Wie in Fig. 2 gezeigt, hat jede Anlagenmodulsteuereinrichtung 60 eine Bestimmungseinrichtung 110, eine Vergleichseinrichtung 150, eine Listenerstellungseinrichtung 160 und eine Berechnungseinrichtung 170. Hierbei dient die Bestimmungseinrichtung 110 zur Bestimmung der in der Behältnisbehandlungsanlage 1 montierten Behandlungselemente bzw. mittels von Behandlungselementen zu erzielenden Behandlungsergebnissen bzw. Rezepten zur Behandlung der Behältnisse, die später näher beschrieben sind. Hierzu können die Behandlungselemente mit RFID-Chips (RFID: Radio Frequency Identification = Funkidentifikation) und/oder einem Code, wie beispielsweise einem Barcode (Strichcode) oder einem anderen zweidimensionalen Code, versehen sein, welche per Funk oder nach einem optischen, magnetischen oder mechanischen Prinzip usw. auslesbar sind. Die Funktion der Vergleichseinrichtung 150, der Listenerstellungseinrichtung 160 und der Berechnungseinrichtung 170 wird später ausführlicher beschrieben.

Zudem hat die Behältnisbehandlungsanlage 1 eine in Fig. 2 gezeigte Anpasseinrichtung 120 zum Anpassen der in der Behältnisbehandlungsanlage 1 montierten Behandlungselemente bzw. mittels von Behandlungselementen zu erzielenden Behandlungsergebnissen bzw. Rezepten zur Behandlung der Behältnisse, die später näher beschrieben sind. Das heißt der Begriff "Behandlungselement" umfasst im Sinne dieser Beschreibung sowohl ein Werkzeug, wie beispielsweise die Klammern 19, als auch indirekt mittels von Behandlungselementen zu erzielende Behandlungsergebnisse als auch indirekt Rezepte zur Behandlung der Behältnisse.

Die Behältnisbehandlungsantage 1 hat zudem eine in Fig. 2 gezeigte Anzeigeeinrichtung 130 zur Anzeige von Informationen über beispielsweise Betriebszustände der Behältnisbehandlungsanlage 1 oder ihrer einzelnen Anlagenmodule 10, 20, 30, 40 oder ihrer Behandlungselemente usw. Die Anzeigeeinrichtung 130 kann jede beliebige herkömmliche Anzeigeeinrichtung sein.

Bei einem Fehler beim Betrieb der Behältnisbehandlungsanlage 1 kann eine Fehlermeldeeinrichtung 140 eine Fehlermeldung ausgeben, wie beispielsweise einen optischen oder akustischen Alarm. Der Alarm kann auch mittels der Anzeigeeinrichtung 130 angezeigt werden.

Wie zuvor beschrieben, führt also jedes der Anlagenmodule 10, 20, 30 und 40 eine spezielle bzw. vorbestimmte Behandlung der Behältnisse aus, wie Streckblasen, Füllen, Etikettieren, etc.

Hierzu umfasst jedes der Anlagenmodule 10, 20, 30 und 40 der Behältnisbehandlungsanlage 1 eine Vielzahl von verschiedenen Garnituren bzw. Behandlungselementen, welche bei den unterschiedlichen Behandlungen der Behältnisse verwendbar sind. Das heißt, das Streck-Blasmodul 10 umfasst beispielsweise die folgenden Behandlungselemente: Heizdorne 12, Abschirmplatte 13, Reflektoren 14, Reckstange/Blasdüse 15, Schieneneinstelleinrichtung 17, Rollenabstandeinstelleinrichtung 18, Klammern 19 etc.

Im Folgenden wird auch von Flaschen gesprochen, wenn die aus den Vorformlingen 2a fertiggestellten Behältnisse oder die Glasbehältnisse 3 gemeint sind.

Genauer gesagt, umfassen die einzelnen genannten Anlagenmodule 10, 20, 30 und 40 der Behältnisbehandlungsanlage sowie nicht dargestellte Anlagenmodule (Pasteurmodul zur Pasteurisierung von in Behältnisse füllbaren Produkten, Behältnisreinigungsmodul zur Reinigung von Behältnissen und bevorzugt Mehrwegflaschen, Kastenwaschmodul zum Waschen von Kasten) der Behältnisbehandlungsanlage beispielsweise die folgenden einzelnen Behandlungselemente bzw. mittels von Behandlungselementen zu erzielende Behandlungsergebnisse bzw. Rezepte, wobei die einzelnen Behandlungselemente zur Vereinfachung nicht alle in Fig. 1 dargestellt sind. Dabei sind auch jeweils veränderbare Parameter dargestellt.
1) Die Behältnisbehandlungsanlage 1 allgemein umfasst beispielsweise: automatische Geschwindigkeitseinstellung (Ausbringung Flaschen pro Stunde); Materialunterscheidung (PET/PP; unterschiedliche Glasarten) --> Anpressdruckeinstellung von Füllventilen, Blasdüse, Etikettenanpressdruck); Einstellen von Puffern auf die maximal benötigte Pufferzeit; Messen, Erkennen und Anzeigen von Füllständen (Preforms, Füller/Mixer --> abzufüllendes Produkt und/oder Zutaten hierfür (CO₂, N₂), Sterilisationsflüssigkeit, Verschlusskappen, Zwischenlagen und Folien für die Palletten (Auslösen von Fehlermeldungen und neuen Bestellungen), ein Umstellen auf weitere Antriebseinheiten, um beispielsweise Transportgeschwindigkeiten anzupassen.
2) Das Streck-Blasmodul 10 umfasst beispielsweise: Lanze bei Linear- oder Rundlaufrinser (Preformausblasung) und Transporthalter hierfür; Schienenabstand einer Preformzuführung; Abstand der Rollen eines Rollensortierers für Preforms; Abstand von Aufnahmen von einem Vertikalförderer für Preforms; Größe einer Verzahnung eines Einlaufsterns (Sägezahnstern) zum Transportieren von Preforms; Heizdorn (Durchmesser und Höhe und Hub); Abstand der Heizkästen zu Preforms oder von einzelnen Heizstrahlern zu den Preforms (Profilierung); Abstände von Heizstrahlern untereinander; Durchmesser von Aufnahmen von Abschirmplatten für Heizdorne oder Preforms; ein Rezept zum thermischen Behandeln von Preforms und/oder Expandieren von Preforms (Zeitpunkt und Größe von Vorblasdruck, einen Fertigblasdruck, einen Vorblasbeginn, einen Spülbeginn, eine Temperatur des Vorformlings, eine Temperatur der Wand einer Blasform, eine Temperatur eines Formbodens, einen Zeitpunkt eines Spülbeginns, einen Druckverlauf, eine Oberflächenkühlung des Vorformlings, eine Mündungskühlung des Vorformlings, Temperatur der Blasformen, Kombinationen hieraus oder dergleichen); Klammern an Transferstern; Blasformen und Boden; Reckstangen oder Reckstangenspitzen; Blasdüsen (Durchmesser); Bodenkurvenwechsel; Einstellung Reckgeschwindigkeit bei Servo oder Linearantrieb oder Wechsel einer Reckkurve auf eine weitere Reckkurve mit anderer Steigung; Druckkissendruckminimierung (Kleine Flaschen - weniger Druck insgesamt nötig - Einsparung von Energie) Flaschenorientierung nach Auslaufstern (und Halter hierfür); bei servoangetriebenen Formträgern: Öffnungshub oder Öffnungswinkelveränderung (bei im Durchmesser kleinen Flaschen muss der Formträger nicht so weit aufgehen, somit kann Zeit eingespart und Verschleiß/Kräfte reduziert werden).
3) Das Füllmodul bzw. der Füllmodulwechselautomat 20 umfasst beispielsweise: das Produkt selbst; Klammern der Transfersterne; Füllventilwechsel; Wechsel der Verschlusskappen und Führungen hierfür; Einlauf: Einteilschnecke, Einteilstern; Behälterführung: Neckhandling: Necksterne, Klammern; Basehandling: Garnituren bzw. Behandlungselemente; Rinserklammern; Neckhalter im Füller- oder Verschließerkarussell; Absenkstern; Schutzkammerbleche im Füller; Füllventil: Distanzstücke im Vakuumventil -Füllventil; Zentrierglocken am Füllventil; Rückluftrohre, Langrohre; Verschließer: Verschließkonen oder-köpfe; Verschlussrinnen; Greif&Platzierungsstation; Abschleppschuh (vom Schuh wird Verschluss selbst von der Flasche abgezogen)
4) Das Etikettiermodul 30 umfasst beispielsweise: Auslaufzunge; Führungsbogen Maschine Einlauf; Führungsbogen Maschine Auslauf; Einlaufstern; Zunge für Einlaufstern; Sperrstern vorhanden; Einteilschnecken; Einlaufführung außen und innen; Transferschnecken; Bremsrolle für Staniolierung; Fußgreifer; Kippgreifer; Zentrierglocke; Etikettengreifer; Flaschengreifer (Neckhandlinggreifer, Fußteller); Greiferzylinder; Aufnahmedorne; Verschiebegreifer; Etikettenspender und Schieber hierfür; Beleimungswalzen; Leim (Heißleim, Kaltleim); Steuerstreifenführungen; Leimschaber; Etikettenabstreifer; Leimsegmentständer; Etikettenanbürstung (Durchmesser, Höhe, Härte); Anrollung ("); Fächer (für eine exakte Führung der Flasche im Einlauf/Auslauf des Etikettiermoduls); Schwammrolle am Transportband (zum Andrücken des Etiketts, Abstands und Durchmesservariation, abhängig vom Flaschendurchmesser); Tischkurvensegment (Kurvensegment zur Steuerung der Flaschendrehung, vs. Servo); Geschwindigkeitsregulierung des Servoantriebs (Anpassung an neue, zu drehende Winkel); Wechseldorn beim Sleeve; richtige Einrichtungen vorhanden/zugeschaltet; richtige Etiketten eingelegt (kundenabhängig).
5) Das Verpackungsmodul 40 umfasst beispielsweise: Wechsel der Einteilerleisten; Wechsel der Spreizkeile bei Zweibahnigkeit; Wechsel der Schubstangen bei anderer Maschinenteilung; Wechsel der Einschlagstäbe; mehr- oder ganzlagige Pack- und Palettier-Greiferköpfe verschiedenster Art; reihenweise Pack- und Palettier-Greiferköpfe verschiedenster Art; wechselbare Trennbleche für Klemmgreifer; Leitbleche für Flaschentisch; Abdeckhauben für Staubschutz; Einführrahmen für Einpacken von Behälter; automatische Top-load-Berechnung (wie viele Lagen Flaschen dürfen in einer Palette aufeinander stehen, ohne dass die Flasche beschädigt oder zerdrückt wird) und Anpassung der Lagen.
6) Die Prüfeinrichtung 50 umfasst beispielsweise: Führungsschienen; Flaschengreifer; Programme zur Erkennung.
7) Das Pasteurmodul umfasst beispielsweise einen Wechsel von einem Rezept auf ein anderes, eine automatische Umstellung der Heiz- bzw. Kühlleistung von Wärmern und Kühlern, ein automatisches Anpassen der Höhe von Abblasgeräten auf eine neue Höhe eines Behältnisses.
8) Das Behältnisreinigungsmodul umfasst beispielsweise einen Wechsel: der Aufsatzstücke und eines Rüttlers für Drängelaufgaben bei Flaschentransporten, eine Position eines Aufgabetischfeldes für Flaschen für das Einführen von Behältnissen in die Maschine, diverse Aufstecker für die Abgabe aus der Maschine bei Gassenabgaben, Temperatur und Konzentration der Reinigungsflüssigkeit, mit der die Flaschen bzw. Behältnisse in Kontakt kommen, Druck und Richtungen von Reinigungs- oder Spülmittelstrahlen, die auf oder in das Behältnis gerichtet werden, Austausch von Transportkörben, in denen die Behältnisse durch das Behältnisreinigungsmodul gefahren werden, mit einer speziellen Biegung versehene Führungsbleche zum Aufhalten von nicht in der korrekten Lage befindlichen Behältnissen (umgefallene, liegende Behältnisse), Umstellung der Breite von Behältnistransportgassen (behältnisdurchmesserabhängig).
9) Das Kastenwaschmodul umfasst beispielsweise: Einstellungen eines Führungsgeländers, an dem die Kästen während des Transports geführt werden, und eines Nockenzugs und andere softwareseitige Umstellungen.

Insbesondere kann durch die Anpassungseinrichtung aufgrund des Erfassungsergebnisses bestimmtes Verpackungsmaterial wie Etiketten, in die Behälter einzubringende Informationschips wie RFID - Transponder, Druckerfarbe für einen Direktdruck auf Etiketten oder auf die Behältnisse, Druckpositionen oder das Mindesthaltbarkeitsdatum automatisch angepasst werden.

Die genannten Anlagenmodule 10, 20, 30 und 40 und deren zuvor genannten vielzähligen Behandlungselemente sind jeweils aus dem Stand der Technik bekannt und werden demzufolge hier nicht näher beschrieben. Erfindungsgemäß erfolgt die jeweilige Anpassung der Behandlungselemente vollautomatisch.

Nachfolgend wird der mit der Anpasseinrichtung 120 in Zusammenhang stehende Betrieb der Behältnisbehandlungsanlage 1 ausführlicher beschrieben.

In einer Abfülllinie der Behältnisbehandlungsanlage 1 erfasst die Erfassungseinrichtung 100 Eigenschaften eines der zu behandelnden Behältnisse 2, 3, wie zuvor beschrieben. Die Erfassungsergebnisse der Erfassungseinrichtung 100 werden der Vergleichseinrichtung 150 zugeführt. Die Vergleichseinrichtung 150 führt dann einen Vergleich eines Erfassungsergebnisses oder der Erfassungsergebnisse der Erfassungseinrichtung 100 mit einem Behältnis-Sollwert für die Vielzahl von Behandlungselementen 11 bis 19, 21 bis 27, 31 aus.

Der Behältnis-Sollwert gibt an, welche Art von Behältnis 2, 3 das Behandlungselement 11 bis 19, 21 bis 27, 31 behandeln kann. Das heißt, der Behältnis-Sollwert sagt beispielsweise aus, ob es sich bei dem Behältnis 2, 3 um einen Vorformling 2 für beispielsweise eine 0,5 Liter fassende Kunststofflasche, einen Vorformling 2 für beispielsweise eine 1,0 Liter fassende Kunststofflasche, einen Vorformling 2 für beispielsweise eine 1,5 Liter fassende Kunststofflasche usw. oder um einen Vorformling 2 aus PET oder PP, oder um eine Glasflasche 3 usw. handelt. Weitere Werte, die dem Behältnis-Sollwert eines Behältnisses 2,3 zugeordnet sein können, sind: Eine Höhe und/oder ein Durchmesser eines Mundstücks eines Vorformlings 2 oder Behältnisses 2, 3; ein Durchmesser eines Transportrings (Ausbuchtung im Schulterbereich von Kunststoffflaschen, insbesondere PET-Flaschen); eine Gesamthöhe oder ein größter Durchmesser eines Behältnisses, wie beispielsweise einer Flasche; ein Durchmesser in einer bestimmten Höhe zum Eingriff von Behandlungseinheiten, speziell die Durchmesser direkt oberhalb und unterhalb des Transportrings, eine Bodenfreiheit eines ausgeformten Behältnisses, beispielsweise einer Flasche (Distanz zwischen Füßen der Flasche zu Anspritzpunkt); ein Material bzw. eine Materialzusammensetzung des Behältnisses 2, 3; eine Kristallinität des Materials des Behältnisses 2, 3; eine Art des Gewindes und/oder eines Verschlusses (z.B. Korken, Schnappverschluss, Kronkorken) des Behältnisses 2, 3; ein Durchmesser und eine Höhe des Verschlusses; eine Farbe des Behältnismaterials; eine Wandstärke des Behältnisses 2, 3 in bestimmten Bereichen; Festigkeiten, wie z.B. Top-load, des Behältnisses 2, 3.

Der Behältnis-Sollwert kann in einer nicht dargestellten Speichereinrichtung vorab gespeichert sein. Diese Speichereinrichtung kann insbesondere der zuvor erwähnte RFID-Chip oder Code sein, der an den Behandlungselementen angebracht ist. Bevorzugt handelt es sich um einen Barcode.

Wenn ein durch die Vergleichseinrichtung 150 durchgeführter Vergleich ergibt, dass das Erfassungsergebnis der Erfassungseinrichtung 100 ungleich dem Behältnis-Sollwert für das mindestens eine Behandlungselement 11 bis 19, 21 bis 27, 31 ist, passt die Anpasseinrichtung 120 mindestens ein Behandlungselement 11 bis 19, 21 bis 27, 31 der Vielzahl von Behandlungselementen 11 bis 19, 21 bis 27, 31 durch Austausch an. Das heißt, die Anpasseinrichtung 120 kann das mindestens eine Behandlungselement 11 bis 19, 21 bis 27, 31 der Vielzahl von Behandlungselementen 11 bis 19, 21 bis 27, 31 austauschen.

Darüber hinaus kann die Listenerstellungseinrichtung 160 eine Liste erstellen, in welcher die Behandlungselemente 11 bis 19, 21 bis 27, 31 aufgelistet sind, für welche der durch die Vergleichseinrichtung 150 durchgeführte Vergleich ergibt, dass das Erfassungsergebnis der Erfassungseinrichtung ungleich dem Behältnis-Sollwert für das mindestens eine Behandlungselement 11 bis 19, 21 bis 27, 31 ist. Die Liste kann auf der Anzeigeeinrichtung 130 angezeigt werden. Hierbei kann die Liste Hinweise geben, welche Behandlungselemente noch auszutauschen oder zu verstellen sind, und/oder angeben, welche Behandlungselemente gerade ausgetauscht oder verstellt werden. Somit kann eine Bedienperson wählen, ob die noch auszutauschenden oder zu verstellenden Behandlungselemente automatisch auszutauschen oder zu verstellen, das heißt anzupassen, sind, oder ob die Bedienperson gegebenenfalls bestimmte Behandlungselemente selbst anpassen möchte.

Vorzugsweise kann die Berechnungseinrichtung 170 eine Berechnung einer Reihenfolge durchführen, welche eine Reihenfolge einer Anpassung von mindestens einem Behandlungselement 11 bis 19, 21 bis 27, 31 der Vielzahl von Behandlungselementen 11 bis 19, 21 bis 27, 31 ist. Diese Reihenfolge ist besonders vorteilhaft eine Reihenfolge, bei welcher ein Öffnen der Schutzeinrichtung 4 der Behältnisbehandlungsanlage 1 nicht durch die Anpassung von mindestens einem Behandlungselement 11 bis 19, 21 bis 27, 31 der Vielzahl von Behandlungselementen 11 bis 19, 21 bis 27, 31 behindert wird. Auch diese Reihenfolge kann auf der Anzeigeeinrichtung 130 angezeigt werden.

Wenn ein durch die Vergleichseinrichtung 150 durchgeführter Vergleich ergibt, dass das Erfassungsergebnis der Erfassungseinrichtung ungleich dem Behältnis-Sollwert für das mindestens eine Behandlungselement 11 bis 19, 21 bis 27, 31 ist, verhindern die Anlagenmodulsteuereinrichtungen 60 einen Betrieb der Behältnisbehandlungsanlage 1. Das heißt, falls die Behältnisbehandlungsanlage 1 noch in Betrieb ist, wenn der durch die Vergleichseinrichtung 150 durchgeführte Vergleich das genannte Ergebnis ergibt, wird die Behältnisbehandlungsanlage 1 mit einer nicht dargestellten Einrichtung zum Stopp der Behältnisbehandlungsanlage 1 gestoppt. Falls die Behältnisbehandlungsanlage 1 jedoch nicht in Betrieb ist bzw. stillsteht, wenn der durch die Vergleichseinrichtung 150 durchgeführter Vergleich das genannte Ergebnis ergibt, wird ein Anfahren der Behältnisbehandlungsanlage 1 unmöglich gemacht bzw. unterbunden. Hierzu kann die Behältnisbehandlungsanlage 1 eine nicht dargestellte Einrichtung zum Unterbinden eines Anfahrens der Behältnisbehandlungsanlage 1 umfassen. Der zwangsweise Stopp der Behältnisbehandlungsanlage 1 oder das zwangsweise Unterbinden eines Anfahrens der Behältnisbehandlungsanlage 1 kann ebenfalls auf der Anzeigeeinrichtung 130 angezeigt werden

In den genannten Fällen, in denen eine Anpassung mindestens eines Behandlungselement 11 bis 19, 21 bis 27, 31 erforderlich ist, kann zudem mittels einer Fehlermeldeeinrichtung 140 eine Fehlermeldung ausgegeben werden, die auch auf der Anzeigeeinrichtung 130 angezeigt werden kann.

Da die einzelnen Anlagenmodulsteuereinrichtungen 60 gemäß diesem Ausführungsbeispiel in Reihe geschaltet sind, kann beispielsweise die Anlagenmodulsteuereinrichtung 60 des Füllmoduls 20 auf den Ergebnissen aufbauen, die bereits von der Anlagenmodulsteuereinrichtung 60 des Streck-Blasmoduls 10 erzielt wurden. Das heißt, die Vergleichseinrichtung 150, die Listenerstellungseinrichtung 160 und die Berechnungseinrichtung 170 des Anlagenmodulsteuereinrichtung 60 des Füllmoduls 20 können nicht nur die Behältnis-Sollwerte heranziehen, wie dies für die Vergleichseinrichtung 150, die Listenerstellungseinrichtung 160 und die Berechnungseinrichtung 170 der Anlagenmodulsteuereinrichtung 60 des Streck-Blasmoduls 10 der Fall ist, sondern auch die bereits von der Vergleichseinrichtung 150, der Listenerstellungseinrichtung 160 und der Berechnungseinrichtung 170 der Anlagenmodulsteuereinrichtung 60 des Streck-Blasmoduls 10 verwendete Werte heranzieht.

### (Zweites Ausführungsbeispiel)

Das zweite Ausführungsbeispiel ist bis auf die Ausführung der Steuerung der Anlagenmodule 10, 20, 30 und 40 identisch zu dem ersten Ausführungsbeispiel. Daher werden im Folgenden nur die von dem ersten Ausführungsbeispiel verschiedenen Teile des zweiten Ausführungsbeispiels beschrieben. Gleiche und gleich bedeutende Teile sind mit gleichen Bezugszeichen versehen.

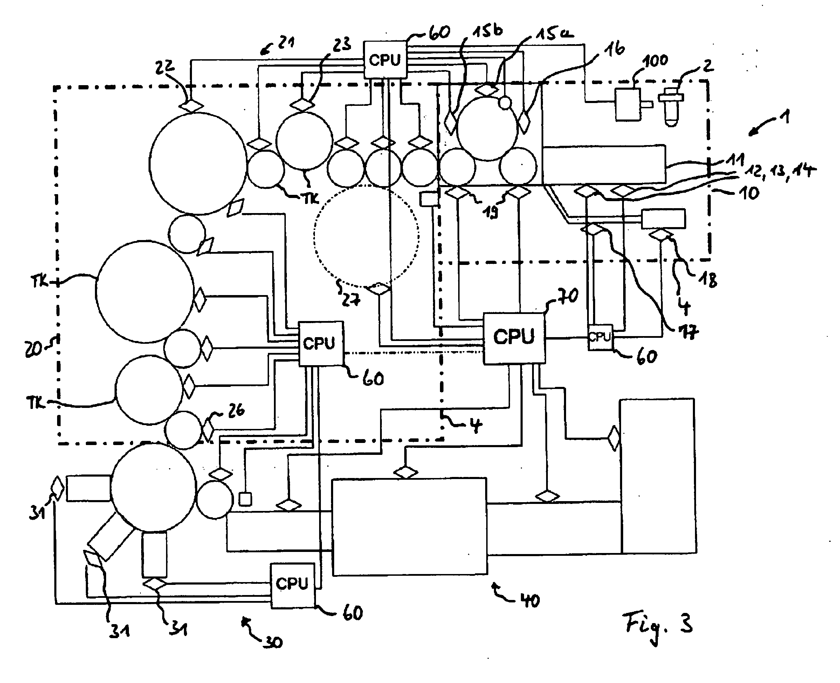

Wie aus Fig. 3 ersichtlich, sind die einzelnen Anlagensteuereinrichtungen 60 nicht in Reihe geschaltet, wie bei dem ersten Ausführungsbeispiel, sondern sie sind über ein Bussystem mit einer zentralen Anlagensteuereinrichtung 70 verbunden. Diese zentrale Anlagensteuereinrichtung 70 ist den einzelnen Anlagensteuereinrichtungen 60 übergeordnet und kann den einzelnen Anlagensteuereinrichtungen 60 Steuerbefehle geben, welche die einzelnen Anlagensteuereinrichtungen 60 für die Anlagenmodule 10, 20, 30 und 40 umsetzen können. Wie in Fig. 3 zudem angegeben, verfügen sowohl die einzelnen Anlagensteuereinrichtungen 60 als auch die zentrale Anlagensteuereinrichtung 70 über eine CPU (Central Processing Unit = zentrale Verarbeitungseinrichtung).

Gemäß dem zweiten Ausführungsbeispiel weist die zentrale Anlagensteuereinrichtung 70 die Vergleichseinrichtung 150, die Listenerstellungseinrichtung 160 und die Berechnungseinrichtung 170 auf. Die zentrale Anlagensteuereinrichtung 70 gibt dann an jede der Anlagenmodulsteuereinrichtungen 60 Befehle auf der Grundlage der durch die Vergleichseinrichtung 150, die Listenerstellungseinrichtung 160 und die Berechnungseinrichtung 170 erzielten Ergebnisse.

Wie in Fig. 3 gezeigt, sind die einzelnen Behandlungselemente anderen Anlagensteuereinrichtungen 60 zugeordnet als in Fig. 1 gezeigt. Je nach Bedarf kann diese Zuordnung auch anders gewählt werden.

Alle anderen Elemente und Funktionen sind bei diesem Ausführungsbeispiel gleich denen des ersten Ausführungsbeispiels und werden daher nicht noch einmal beschrieben.

### (Allgemeines)

Alle zuvor beschriebenen Ausgestaltungen der Behältnisbehandlungsanlage 1 und des Behältnisbehandlungsverfahrens können einzeln oder in allen möglichen Kombinationen Verwendung finden. Hierbei sind insbesondere folgende Modifikationen denkbar.

Die Steuerung der Behältnisbehandlungsanlage 1 kann auch über einen separaten Computer erfolgen. In diesem Fall kann eine Schnittstelle an der Erfassungseinrichtung 100 vorhanden sein, die insbesondere eine Kamera sein kann. Über die Schnittstelle kann die Erfassungseinrichtung 100 mit dem separaten Computer kommunizieren, beispielsweise drahtgebunden, per Funk, usw.

Die Auswertung der von der Erfassungseinrichtung 100 erfassten Ergebnisse, die Signale sein können, kann auch direkt in der Erfassungseinrichtung 100 vorgenommen werden, die beispielsweise ein Sensor ist.

Beispielsweise kann die Anpasseinrichtung 120 ein Roboter sein, welcher alle Behandlungselemente der Behältnisbehandlungsanlage 1 abfährt und erforderliche Anpassungen der Behandlungselemente vornimmt.

Es ist ferner möglich, den Austausch der Behandlungselemente mittels der Anpasseinrichtung 120 werkzeuglos durchzuführen. Dies ist beispielsweise insbesondere für den Schwenkarm und/oder die Heizdorne 12 und/oder die Abschirmplatte 13 möglich.

Zudem kann die Anpassung der Behandlungselemente des Füllmoduls 20, des Etikettiermoduls 30 und des Verpackungsmoduls 40 sowie der Prüfeinrichtungen 50 automatisch vollzogen werden, wenn an dem Streck-Blasmodul 10 eine entsprechende Rezeptwahl vorgenommen wurde, beispielsweise durch eine Bedienperson. Eine Eingabe der Bedienperson könnte praktisch mit der Rezeptwahl, bzw. durch Eingabe der Rezeptwahl, insbesondere über eine nicht dargestellte Schalteinrichtung, wie beispielsweise einen Taster, vorgenommen werden.

Es ist zudem möglich, dass die Anpasseinrichtung 120 nur eine Teilmenge der Behandlungselemente anpasst, welche insgesamt als anzupassen bestimmt wurden. Hierbei ist es möglich, dass mindestens zwei Behandlungselemente durch die Anpasseinrichtung 120 automatisch gewechselt werden, während die anderen Behandlungselemente, die als noch anzupassen bestimmt sind, durch eine Bedienperson angepasst werden. Statt der mindestens zwei Behandlungselemente können auch mindestens drei oder mehr Behandlungselemente durch die Anpasseinrichtung 120 automatisch gewechselt werden.

### Bezugszeichenliste

- 1: Behältnisbehandlungsanlage
- 2: Vorformlinge
- 3: Glasbehältnis
- 4: Schutzeinrichtung
- 10: Streck-Blasmodul
- 11: Erwärmungseinrichtung
- 12: Heizdorn bzw. Heizdornwechselautomat
- 13: Abschirmplatte bzw. Abschirmplattenwechselautomat
- 14: Reflektoren bzw. Reflektorenwechselautomat
- 15a: Reckstange/Blasdüse bzw. Reckstange/Blasdüsewechselautomat
- 15b: Reckkurve/Bodenkurve bzw. Reckkurve/Bodenkurve-Verstell- oder Wechselau- tomat
- 16: Blasformeinrichtung bzw. Blasformwechselautomat
- 17: Schieneneinstelleinrichtung
- 18: Rollenabstandeinstelleinrichtung
- 19: Klammern bzw. Klammernwechselautomat
- 20: Füllmodul bzw. Füllmodulwechselautomat
- 21: Reinigungseinrichtung
- 22: Sterilisationsstation
- 23: Rinser
- 24: Produktmischeinrichtung
- 25: Verschlusskappenstation
- 26: Ablenkstern oder Klammern
- 27: Dynamischer Puffer (Acculink)
- 30: Etikettiermodul
- 31: Etikettiereinrichtung
- 40: Verpackungsmodul
- 50: Prüfeinrichtung
- 60: Anlagenmodulsteuereinrichtung
- 70: Zentrale Anlagenmodulsteuereinrichtung
- 100: Erfassungseinrichtung
- 110: Bestimmungseinrichtung
- 120: Anpasseinrichtung
- 130: Anzeigeeinrichtung
- 140: Fehlermeldeeinrichtung
- 150: Vergleichseinrichtung
- 160: Listenerstellungseinrichtung
- 170: Berechnungseinrichtung
- TK: Transportkarussell

## Patentansprüche

1. Behältnisbehandlungsanlage (1) zur Behandlung von mit einem Produkt befüllbaren Behältnissen (2, 3), mit einer Vielzahl von Behandlungselementen (11 bis 19, 21 bis 27, 31), wobei jedes Behandlungselement (11 bis 19, 21 bis 27, 31) für eine vorbestimmte Behandlung der Behältnisse (2, 3) Verwendung findet und jedem Behandlungselement (11 bis 19, 21 bis 27, 31) ein Behältnis-Sollwert zugeordnet ist, welcher angibt, welche Art von Behältnis (2, 3) das Behandlungselement (11 bis 19, 21 bis 27, 31) behandeln kann,
einer Erfassungseinrichtung (100) zur Erfassung von Eigenschaften eines der zu behandelnden Behältnisse (2, 3),
einer Vergleichseinrichtung (150) zum Vergleich eines Erfassungsergebnisses der Erfassungseinrichtung (100) mit dem Behältnis-Sollwert für mindestens ein Behandlungselement (11 bis 19, 21 bis 27, 31), und
einer Anpasseinrichtung (120) zum Anpassen mindestens eines Behandlungselements (11 bis 19, 21 bis 27, 31) der Vielzahl von Behandlungselementen (11 bis 19, 21 bis 27, 31), wenn ein durch die Vergleichseinrichtung (150) durchgeführter Vergleich ergibt, dass das Erfassungsergebnis der Erfassungseinrichtung (100) ungleich dem Behältnis-Sollwert für das mindestens eine Behandlungselement (11 bis 19, 21 bis 27, 31) ist,
**dadurch gekennzeichnet, dass**
das mindestens eine Behandlungselement (11 bis 19, 21 bis 27, 31) der Vielzahl von Behandlungselementen (11 bis 19, 21 bis 27, 31) mittels der Anpasseinrichtung (120) durch Austausch des mindestens einen Behandlungselements (11 bis 19, 21 bis 27, 31) automatisch anpassbar ist.

2. Behältnisbehandlungsanlage nach Anspruch 1, wobei die Anpasseinrichtung (120) derart ausgestaltet ist, dass sie das mindestens eine Behandlungselement (11 bis 19, 21 bis 27, 31) der Vielzahl von Behandlungselementen (11 bis 19, 21 bis 27, 31) durch Verstellen des mindestens einen Behandlungselements (11 bis 19, 21 bis 27, 31) anpasst.

3. Behältnisbehandlungsanlage nach einem der vorangehenden Ansprüche, zudem mit einer Listenerstellungseinrichtung (160) zur Erstellung einer Liste, in welcher die Behandlungselemente (11 bis 19, 21 bis 27, 31) aufgelistet sind, für welche der durch die Vergleichseinrichtung (150) durchgeführte Vergleich ergibt, dass das Erfassungsergebnis der Erfassungseinrichtung ungleich dem Behältnis-Sollwert für das mindestens eine Behandlungselement (11 bis 19, 21 bis 27, 31) ist.

4. Behältnisbehandlungsanlage nach einem der vorangehenden Ansprüche, zudem mit einer Berechnungseinrichtung (170) zur Berechnung einer Reihenfolge einer Anpassung von mindestens einem Behandlungselement (11 bis 19, 21 bis 27, 31) der Vielzahl von Behandlungselementen (11 bis 19, 21 bis 27, 31), bei welcher Reihenfolge ein Öffnen einer Schutzeinrichtung (4) der Behältnisbehandlungsanlage (1) nicht durch die Anpassung von mindestens einem Behandlungselement (11 bis 19, 21 bis 27, 31) der Vielzahl von Behandlungselementen (11 bis 19, 21 bis 27, 31) behindert wird.

5. Behältnisbehandlungsanlage nach einem der vorangehenden Ansprüche, zudem mit einer Einrichtung zum Stopp der Behältnisbehandlungsanlage (1), wenn ein durch die Vergleichseinrichtung (150) durchgeführter Vergleich ergibt, dass das Erfassungsergebnis der Erfassungseinrichtung ungleich dem Behältnis-Sollwert für das mindestens eine Behandlungselement (11 bis 19, 21 bis 27, 31) ist.

6. Behältnisbehandlungsanlage nach einem der vorangehenden Ansprüche, zudem mit einer Fehlermeldeeinrichtung (140) zur Ausgabe einer Fehlermeldung, wenn ein durch die Vergleichseinrichtung (150) durchgeführter Vergleich ergibt, dass das Erfassungsergebnis der Erfassungseinrichtung (100) ungleich dem Behältnis-Sollwert für das mindestens eine Behandlungselement (11 bis 19, 21 bis 27, 31) ist.

7. Behältnisbehandlungsanlage nach Anspruch 6, zudem mit einer Anzeigeeinrichtung (130) zur Anzeige eines Erfassungsergebnisses der Erfassungseinrichtung (100) und/oder eines Vergleichsergebnisses der Vergleichseinrichtung (150) und/oder einer durch die Listenerstellungseinrichtung (160) erstellten Liste und/oder eines Berechnungsergebnisses der Berechnungseinrichtung (170) und/oder eines Stopps der Behältnisbehandlungsanlage und/oder einer Fehlermeldung.

8. Behältnisbehandlungsanlage nach einem der vorangehenden Ansprüche, zudem mit einer Vielzahl von Anlagenmodulen (10, 20, 30, 40) zur Ausführung einer vorbestimmten Behandlung der Behältnisse (2, 3), wobei jedes der Vielzahl von verschiedenen Anlagenmodulen (10, 20, 30, 40) einen Teil der Velzahl von Behandlungselementen (11 bis 19, 21 bis 27, 31) aufweist.

9. Behältnisbehandlungsanlage nach Anspruch 8, wobei jedes der Vielzahl von verschiedenen Anlagenmodulen (10, 20, 30, 40) eine Anlagenmodulsteuereinrichtung (60) zur Steuerung eines Betriebs des Anlagenmoduls (10, 20, 30, 40) aufweist, und wobei die Anlagenmodulsteuereinrichtungen (60) in Reihe geschaltet sind.

10. Behältnisbehandlungsanlage nach Anspruch 8, wobei jedes der Vielzahl von verschiedenen Anlagenmodulen eine Anlagenmodulsteuereinrichtung (60) zur Steuerung eines Betriebs des Anlagenmoduls (10, 20, 30, 40) aufweist, und wobei die Anlagenmodulsteuereinrichtungen (60) über ein Kommunikationsbussystem verbunden sind.

11. Behältnisbehandlungsanlage nach einem der Ansprüche 8 bis 10, wobei die Vielzahl von Anlagenmodulen (10, 20, 30, 40) ein Streck-Blasmodul (10) zur Ausführung eines Streckblasverfahrens, bei welchem aus Vorformlingen (2) Behältnisse zur Aufnahme eines Produkts geformt werden und/oder ein Füllmodul (20) zum Befüllen der Behältnisse (2, 3) mit mindestens einem Produkt und Verschließen der Behältnisse (2, 3) und/oder ein Etikettiermodul (30) zur Etikettierung der Behältnisse (2, 3) und/oder ein Verpackungsmodul (40) zur Verpackung der befüllten und etikettierten Behältnisse (2, 3) umfasst.

12. Behältnisbehandlungsanlage nach Anspruch 11, wobei die Vielzahl von Behandlungselementen (11 bis 19, 21 bis 27, 31) ein Rezept zur Behandlung von Behältnissen (2) in einer Blaseinrichtung des Streck-Blasmoduls (10) umfasst.

13. Behältnisbehandlungsverfahren zur Behandlung von mit einem Produkt befüllbaren Behältnissen mit einer Behältnisbehandlungsanlage, die eine Vielzahl von Behandlungselementen (11 bis 19, 21 bis 27, 31) aufweist,
wobei jedes Behandlungselement (11 bis 19, 21 bis 27, 31) für eine vorbestimmte Behandlung der Behältnisse Verwendung findet und jedem Behandlungselement (11 bis 19, 21 bis 27, 31) ein Behältnis-Sollwert zugeordnet ist, welcher angibt, welche Art von Behältnis (2, 3) das Behandlungselement (11 bis 19, 21 bis 27, 31) behandeln kann,und
wobei das Verfahren die Schritte umfasst:
Erfassen von Eigenschaften eines der zu behandelnden Behältnisse (2, 3),
Vergleichen eines Erfassungsergebnisses der Erfassungseinrichtung (100) mit dem Behältnis-Sollwert für mindestens ein Behandlungselement (11 bis 19, 21 bis 27, 31),
Anpassen mindestens eines Behandlungselements (11 bis 19, 21 bis 27, 31) der Vielzahl von Behandlungselementen (11 bis 19, 21 bis 27, 31), wenn ein Vergleich ergibt, dass das Erfassungsergebnis ungleich dem Behältnis-Sollwert für das mindestens eine Behandlungselement (11 bis 19, 21 bis 27, 31) ist, wobei
das mindestens eine Behandlungselement (11 bis 19, 21 bis 27, 31) der Vielzahl von Behandlungselementen (11 bis 19, 21 bis 27, 31) durch Austausch des mindestens einen Behandlungselements (11 bis 19, 21 bis 27, 31) automatisch anpassbar ist.

## Claims

1. A container treatment plant (1) for the treatment of containers (2, 3) capable of being filled with a product, with a plurality of treatment elements (11 to 19, 21 to 27, 31), wherein each treatment element (11 to 19, 21 to 27, 31) is used for a pre-determined treatment of the containers (2, 3) and each treatment element (11 to 19, 21 to 27, 31) has associated therewith a container nominal value which indicates which type of container (2, 3) the treatment element (11 to 19, 21 to 27, 31) can treat, a detection device (100) for detecting properties of one of the containers (2, 3) to be treated, and a comparator device (150) for comparing a detection result of the detection device (100) with the container nominal value for at least one treatment element (11 to 19, 21 to 27, 31) and with an adaptor device (120) for adapting at least one treatment element (11 to 19, 21 to 27, 31) of the plurality of treatment elements (11 to 19, 21 to 27, 31) if a comparison carried out by the comparator device (150) reveals that the detection result of the detection device (100) is not equal to the container nominal value for the at least one treatment element (11 to 19, 21 to 27, 31),
**characterised in that**
the at least one treatment element (11 to 19, 21 to 27, 31) of the plurality of treatment elements (11 to 19, 21 to 27, 31) can be automatically adapted by means of the adaptor device (120) by exchanging the at least one treatment element (11 to 19, 21 to 27, 31) .

2. A container treatment plant according to claim 1, wherein the adaptor device (120) is designed in such a way that it adapts the at least one treatment element (11 to 19, 21 to 27, 31) of the plurality of treatment elements (11 to 19, 21 to 27, 31) by adjusting the at least one treatment element (11 to 19, 21 to 27, 31).

3. A container treatment plant according to claim 1, in addition with a list compilation device (160) for compiling a list in which the treatment elements (11 to 19, 21 to 27, 31) are listed for which the comparison carried out by the comparator device (150) reveals that the detection result of the detection device is not equal to the container nominal value for the at least one treatment element (11 to 19, 21 to 27, 31) .

4. A container treatment plant according to claim 2, in addition with a calculation device (170) for calculating a sequence of adapting at least one treatment element (11 to 19, 21 to 27, 31) of the plurality of treatment elements (11 to 19, 21 to 27, 31), in which sequence an opening of a protection device (4) of the container treatment plant (1) is not impeded by the adaptation of at least one treatment element (11 to 19, 21 to 27, 31) of the plurality of treatment elements (11 to 19, 21 to 27, 31).

5. A container treatment plant according to claim 1, in addition with a device for stopping the container treatment plant (1) if a comparison carried out by the comparator device (150) reveals that the detection result of the detection device is not equal to the container nominal value for the at least one treatment element (11 to 19, 21 to 27, 31).

6. A container treatment plant according to claim 1, in addition with a fault reporting device (140) for emitting a fault report if a comparison carried out by the comparator device (150) reveals that the detection result of the detection device (100) is not equal to the container nominal value for the at least one treatment element (11 to 19, 21 to 27, 31).

7. A container treatment plant according to claim 6, in addition with a display device (130) for displaying a detection result of the detection device (100) and/or a comparison result of the comparator device (150) and/or a list compiled by the list compilation device (160) and/or a calculation result of the calculation device (170) and/or a stop of the container treatment plant and/or a fault report.

8. A container treatment plant according to claim 1, in addition with a plurality of plant modules (10, 20, 30, 40) for carrying out a pre-determined treatment of the containers (2, 3), wherein each of the plurality of different plant modules (10, 20, 30, 40) has some of the plurality of treatment elements (11 to 19, 21 to 27, 31).

9. A container treatment plant according to claim 8, wherein each of the plurality of different plant modules (10, 20, 30, 40) has a plant module control device (60) for controlling an operation of the plant module (10, 20, 30, 40), and wherein the plant module control devices (60) are connected in series.

10. A container treatment plant according to claim 8, wherein each of the plurality of different plant modules has a plant module control device (60) for controlling an operation of the plant module (10, 20, 30, 40), and wherein the plant module control devices (60) are connected by way of a communication bus system.

11. A container treatment plant according to any claims 8 to 10, wherein the plurality of plant modules (10, 20, 30, 40) comprises a stretch blow moulding module (10) for carrying out a stretch blow moulding method in which containers for receiving a product are shaped from pre-forms (2) and/or a filling module (20) for filling the containers (2, 3) with at least one product and closing the containers (2, 3) and/or a labelling module (30) for labelling the containers (2, 3) and/or a packing module (40) for packing the filled and labelled containers (2, 3).

12. A container treatment plant according to claim 11, wherein the plurality of treatment elements (11 to 19, 21 to 27, 31) comprises a formula for the treatment of containers (2) in a blow moulding device of the stretch blow moulding module (10) .

13. A container treatment method for the treatment of containers capable of being filled with a product with a container treatment plant which has a plurality of treatment elements (11 to 19, 21 to 27, 31), wherein each treatment element (11 to 19, 21 to 27, 31) is used for a pre-determined treatment of the containers and each treatment element (11 to 19, 21 to 27, 31) has associated therewith a container nominal value which indicates which type of container (2, 3) the treatment element (11 to 19, 21 to 27, 31) can treat, and wherein the method comprises the steps: detection of properties of one of the containers (2, 3) to be treated, and comparison of a detection result of the detection device (100) with the container nominal value for at least one treatment element (11 to 19, 21 to 27, 31), adapting of at least one treatment element of the of the plurality of treatment elements (11 to 19, 21 to 27, 31) if a comparison carried out by the comparator device (150) reveals that the detection result of the detection device (100) is not equal to the container nominal value for the at least one treatment element (11 to 19, 21 to 27, 31) wherein the at least one treatment element (11 to 19, 21 to 27, 31) of the plurality of treatment elements (11 to 19, 21 to 27, 31) can be adapted automatically by exchanging the at least one treatment element (11 to 19, 21 to 27, 31).

## Revendications

1. Installation de traitement de récipients (1) destinée au traitement de récipients (2, 3) pouvant être remplis d'un produit, comportant une pluralité d'éléments de traitement (11 à 19, 21 à 27, 31), où chaque élément de traitement (11 à 19, 21 à 27, 31) est utilisé pour un traitement prédéterminé des récipients (2, 3) et où à chaque élément de traitement (11 à 19, 21 à 27, 31) est associée une valeur de consigne de récipient qui indique quel type de récipient (2, 3) peut être traité par l'élément de traitement (11 à 19, 21 à 27, 31),
un dispositif de détection (100) pour détecter les propriétés d'un des récipients (2, 3) à traiter,
un dispositif de comparaison (150) pour la comparaison d'un résultat de détection du dispositif de détection (100) avec la valeur de consigne de récipient pour au moins un élément de traitement (11 à 19, 21 à 27, 31), et
un dispositif d'ajustement (120) pour l'ajustement d'au moins un élément de traitement (11 à 19, 21 à 27, 31) de la pluralité d'éléments de traitement (11 à 19, 21 à 27, 31), s'il ressort d'une comparaison effectuée par le dispositif de comparaison (150) que le résultat de détection du dispositif de détection (100) n'est pas égal à la valeur de consigne de récipient pour au moins un élément de traitement (11 à 19, 21 à 27, 31),
**caractérisée en ce qu'**au
moins un élément de traitement (11 à 19, 21 à 27, 31) de la pluralité d'éléments de traitement (11 à 19, 21 à 27, 31) sont ajustables automatiquement au moyen du dispositif d'ajustement (120), par remplacement d'au moins un élément de traitement (11 à 19, 21 à 27, 31).

2. Installation de traitement de récipients selon la revendication 1, dans laquelle le dispositif d'ajustement (120) est réalisé de manière à ajuster au moins un élément de traitement (11 à 19, 21 à 27, 31) de la pluralité d'éléments de traitement (11 à 19, 21 à 27, 31) par réglage d'au moins un élément de traitement (11 à 19, 21 à 27, 31).

3. Installation de traitement de récipients selon l'une des revendications précédentes, comportant en outre un dispositif de création de liste (160) pour la création d'une liste où figurent les éléments de traitement (11 à 19, 21 à 27, 31) pour lesquels il ressort de la comparaison effectuée par le dispositif de comparaison (150) que le résultat de détection du dispositif de détection n'est pas égal à la valeur de consigne de récipient pour au moins un élément de traitement (11 à 19, 21 à 27, 31).

4. Installation de traitement de récipients selon l'une des revendications précédentes, comportant en outre un dispositif de calcul (170) pour le calcul d'un ordre d'ajustement d'au moins un élément de traitement (11 à 19, 21 à 27, 31) de la pluralité d'éléments de traitement (11 à 19, 21 à 27, 31), ordre pour lequel une ouverture d'un dispositif de protection (4) de l'installation de traitement de récipients (1) n'est pas empêchée par l'ajustement d'au moins un élément de traitement (11 à 19, 21 à 27, 31) de la pluralité d'éléments de traitement (11 à 19, 21 à 27, 31).

5. Installation de traitement de récipients selon l'une des revendications précédentes, comportant en outre un dispositif pour arrêter l'installation de traitement de récipients (1), s'il ressort d'une comparaison effectuée par le dispositif de comparaison (150) que le résultat de détection du dispositif de détection n'est pas égal à la valeur de consigne de récipient pour au moins un élément de traitement (11 à 19, 21 à 27, 31).

6. Installation de traitement de récipients selon l'une des revendications précédentes, comportant en outre un dispositif de signalement d'erreur (140) pour l'émission d'un message d'erreur, s'il ressort d'une comparaison effectuée par le dispositif de comparaison (150) que le résultat de détection du dispositif de détection (100) n'est pas égal à la valeur de consigne de récipient pour au moins un élément de traitement (11 à 19, 21 à 27, 31).

7. Installation de traitement de récipients selon la revendication 6, comportant en outre un dispositif d'affichage (130) pour l'affichage d'un résultat de détection du dispositif de détection (100) et/ou d'un résultat de comparaison du dispositif de comparaison (150) et/ou d'une liste créée par le dispositif de création de liste (160) et/ou d'un résultat de calcul du dispositif de calcul (170) et/ou d'un arrêt de l'installation de traitement de récipients et/ou d'un message d'erreur.

8. Installation de traitement de récipients selon l'une des revendications précédentes, comportant en outre une pluralité de modules d'installation (10, 20, 30, 40) pour l'exécution d'un traitement prédéterminé des récipients (2, 3), chaque module de la pluralité des différents modules d'installation (10, 20, 30, 40) comportant une partie de la pluralité des éléments de traitement (11 à 19, 21 à 27, 31).

9. Installation de traitement de récipients selon la revendication 8, dans laquelle chaque module de la pluralité des différents modules d'installation (10, 20, 30, 40) comporte un dispositif de module d'installation (60) pour la commande d'un fonctionnement du module d'installation (10, 20, 30, 40), et dans laquelle les dispositifs de modules d'installation (60) sont montés en série.

10. Installation de traitement de récipients selon la revendication 8, dans laquelle chaque module de la pluralité des différents modules d'installation comporte un dispositif de module d'installation (60) pour la commande d'un fonctionnement du module d'installation (10, 20, 30, 40), et dans laquelle les dispositifs de modules d'installation (60) sont reliés par un système de bus de communication.

11. Installation de traitement de récipients selon l'une des revendications 8 à 10, dans laquelle la pluralité de modules d'installation (10, 20, 30, 40) comprend un module d'étirage-soufflage (10) pour l'exécution d'un procédé d'étirage-soufflage, où des récipients destinés à recevoir un produit sont formés à partir de préformes (2), et/ou un module de remplissage (20) pour le remplissage des récipients (2, 3) avec au moins un produit et la fermeture des récipients (2, 3), et/ou un module d'étiquetage (30) pour l'étiquetage des récipients (2, 3), et/ou un module d'emballage (40) pour l'emballage des récipients (2, 3) remplis et étiquetés.

12. Installation de traitement de récipients selon la revendication 11, dans laquelle la pluralité d'éléments de traitement (11 à 19, 21 à 27, 31) comprend une formule pour le traitement de récipients (2) dans un dispositif de soufflage du module d'étirage-soufflage (10).

13. Procédé de traitement de récipients pour le traitement de récipients pouvant être remplis d'un produit par une installation de traitement de récipients comportant une pluralité d'éléments de traitement (11 à 19, 21 à 27, 31),
dans lequel chaque élément de traitement (11 à 19, 21 à 27, 31) est utilisé pour un traitement prédéterminé des récipients et dans lequel à chaque élément de traitement (11 à 19, 21 à 27, 31) est associée une valeur de consigne de récipient qui indique quel type de récipient (2, 3) peut être traité par l'élément de traitement (11 à 19, 21 à 27, 31), et
dans lequel ledit procédé comprend les étapes suivantes :
détection des propriétés d'un des récipients (2, 3) à traiter, et comparaison d'un résultat de détections du dispositif de détection (100) avec la valeur de consigne de récipient pour au moins un élément de traitement (11 à 19, 21 à 27, 31),
ajustement d'au moins un élément de traitement (11 à 19, 21 à 27, 31) de la pluralité d'éléments de traitement (11 à 19, 21 à 27, 31), s'il ressort d'une comparaison que le résultat de détection n'est pas égal à la valeur de consigne de récipient pour au moins un élément de traitement (11 à 19, 21 à 27, 31),
l'au moins un élément de traitement (11 à 19, 21 à 27, 31) de la pluralité d'éléments de traitement (11 à 19, 21 à 27, 31) étant ajustable automatiquement par remplacement d'au moins un élément de traitement (11 à 19, 21 à 27, 31).
